# EUROPÄISCHE PATENTSCHRIFT

(11) **EP 0 610 464 B1**
(45) Veröffentlichungstag und Bekanntmachung des Hinweises auf die Patenterteilung: **06.11.1996**
(21) Anmeldenummer: 93915696.4
(22) Anmeldetag: 07.08.1993
(51) Int. Cl.: H01H 35/14

(54) **BESCHLEUNIGUNGSSCHALTER UND VERFAHREN ZUR HERSTELLUNG**
INERTIA SWITCH
INTERRUPTEUR INERTIEL ET SON PROCEDE DE FABRICATION

(30) Priorität: 01.09.1992 DE 4229068
(43) Veröffentlichungstag der Anmeldung: 17.08.1994
(73) Patentinhaber: ROBERT BOSCH GMBH, 70442 Stuttgart (DE); MICROPARTS GESELLSCHAFT FÜR MIKROSTRUKTURTECHNIK mbH, D-44227 Dortmund (DE)
(72) Erfinder: ZABLER, Erich, D-76297 Stutensee (DE); UHLER, Werner, D-76646 Bruchsal (DE); BAUMANN, Andreas, D-76275 Ettlingen (DE); EICHER, Joachim, D-76185 Karlsruhe (DE); PETERS, Ralf-Peter, D-51467 Bergisch Gladbach (DE)
(86) Internationale Anmeldenummer: DE9300708
(87) Internationale Veröffentlichungsnummer: WO9406144

(56) Entgegenhaltungen:
- WO-A-88/08613
- DE-A- 2 715 391
- DE-A- 4 126 107
- US-A- 2 930 863
- IEEE TRANSACTIONS ON ELECTRON DEVICES, Band 35, No. 6, Juni 1988, (New York), Long Sheng Fan et al, "Integrated Movable Micromechanical Structures for Sensors and Actuators"
- MICRO SYSTEM Technologies 90, Band, September 1990, (Berlin), J. Mohr et al, "Movable Microstructures Manufactured by the LIGA Proces as Basic Elements for Microsystems"

## Beschreibung

Die Erfindung geht aus von einem Beschleunigungsschalter nach der Gattung des Hauptanspruchs. Aus der deutschen Patentanmeldung 41 26 107, die am 18. Februar 1993 veröffentlicht wurde und der WO-A-9303385 (Stand der Technik gemäß Art. 54(3) EPÜ) entspricht, ist schon ein Beschleunigungsschalter bekannt, der jedoch erst bei einer Beschleunigung entgegen der Auslenkungsrichtung wieder in die Ausgangslage zurückkehrt. Aus der DE-A1 37 27 142 ist ein Verfahren zur Herstellung eines Schalters aus Metall unter Verwendung einer polymeren Opferschicht beschrieben. Mohr et al beschreibt in Microsystems Technologies 90, International Conference on Microelectro, Opto, Mechanic Systems and Components Berlin, 10.-13. September 1990, Springer Verlag Seite 529 bis 537 die Herstellung von beweglichen Strukturen mit dem Liga-Verfahren unter Verwendung einer metallischen Opferschicht. Die Herstellung geeigneter Strukturen für den Beschleunigungsschalter aus Silizium wird beispielsweise von Fan et al., IEEE Trans. Electron Dev., vol.35, S.724 - 730,1988 beschrieben.

Weiterhin offenbart die WO-A-88/08613 einen Beschleunigungsschalter, der ein Feder-Masse-System aufweist, das bei Beschleunigungen, dei kleiner sind als ein vorgegebener Beschleunigungswert, nur geringfügig aus einer Ausgangslage abweicht und beim überschreiten des vorgegebenen Beschleunigungswerts in eine Auslenkungslage Springt.

### Aufgabe der Erfindung

Aufgabe der Erfindung ist es, einen Beschleunigungsschalter zu schaffen, der eine kurze Reaktionszeit und eine definierte Schaltschwelle besitzt und der hohen Sicherheitsanforderungen genügt. Dieser soll zum Einsatz in Sicherheitseinrichtungen in Fahrzeugen eingesetzt werden können. Die Aufgabe wird durch einen Schalter nach Anspruch 1 gelöst. Zum Schalten eines großen Stroms zum direkten Auslösen eines Sicherheitssystems kann der Schalter weitergebildet werden, wie in den weiteren Ansprüchen ausgeführt wird.

### Vorteile der Erfindung

Der erfindungsgemäße Beschleunigungsschalter mit den kennzeichnenden Merkmalen des Hauptanspruchs hat demgegenüber den Vorteil, daß der Schalter bereits beim Unterschreiten einer Beschleunigungsschwelle in Auslöserichtung von selbst wieder öffnet.

Die Öffnung des Schalters erfolgt aus der rein mechanischen Konstruktion, es sind daher keine zusätzlichen Stellglieder erforderlich, die die Kosten erhöhen oder die Sicherheit beeinträchtigen.

Das Auslösen des Schaltvorganges erfolgt reibungs- und somit verschleißfrei. Aufgrund des erfindungsgemäßen Schalteffektes wird eine definierte Schaltschwelle und Kontaktkraft erzielt, wobei eine schleichende Kontaktgabe mit einem undefinierten Übergangsbereich zwischen dem offenen und geschlossen Schaltzustand weitgehend unterdrückt wird. Weiterhin stellt der Schalter ein einfaches mechanisches System dar, das besonders robust ist und aufgrund seiner kleinen geometrischen Abmessungen besonders schnell schaltet. Durch das rein mechanische Wirkprinzip des Beschleunigungsschalters ist dieser unempfindlich gegen elektromagnetische Störungen, wie sie insbesondere in Kraftfahrzeugen auftreten können. Die Schalteigenschaften wie Schaltschwelle, Kontaktkraft, Schaltweg und Schaltzeit sind dabei in weiten Bereichen durch die Formung der Feder einzustellen. Das erfindungsgemäße Verfahren hat den Vorteil, daß die Beschleunigungsschalter mit großer Präzision hergestellt werden können. Da durch das erfindungsgemäße Verfahren eine Vielzahl von Beschleunigungsschaltern parallel hergestellt werden können, sind die Herstellungskosten gering.

Durch die in den Unteransprüchen aufgeführten Maßnahmen sind vorteilhafte Weiterbildungen und Verbesserungen des im Hauptanspruch angegebenen Beschleunigungsschalters möglich. Besonders einfach werden die Federn als Biegebalken ausgeführt, wobei das gewünschte nichtlineare Verhalten beispielsweise durch eine Krümmung der Federn erreicht wird. Durch entsprechende Auslegung des Federn läßt sich die Schaltschwelle und die Kontaktkraft des Sensors in weiten Grenzen durch das Design vorgeben. Da die Herstellungskosten pro Schalter von der verbrauchten Fläche abhängen, kann durch Anordnung der Federn in Ausnehmungen der seismischen Masse Platz gespart und somit die Herstellungskosten verringert werden. Bei geschlossenem Schalter fließt der Strom bei einer besonders einfachen Ausführungsform vom Lagerblock über die Feder und die seismische Masse zum Kontaktblock. Durch Teilen des Kontaktblocks entsteht ein Schalter, bei dem der Strom vom einen Teil des Kontaktblocks über die seismische Masse zum anderen Teil des Kontaktblocks fließen kann. Der maximal zulässige Strom wird bei dieser Ausgestaltung des Beschleunigungsschalters nicht von den geometrischen Abmessungen der Federn begrenzt. Durch die Aufteilung der seismischen Masse in einen Schwerkörper und einen Kontaktbalken wird es möglich, den Kontaktschluß zwischen seismischer Masse und Kontaktblock zu verbessern. Durch die elastische Aufhängung des Kontaktbalkens wird sichergestellt, daß der Kontakt des Kontaktbalkens zu beiden Teilen des Kontaktblocks mit annähernd gleicher Kraft erfolgt. Durch die Verwendung eines Hebels zwischen dem Schwerkörper und dem Kontaktbalken kann die Kontaktkraft erhöht werden. Hierdurch kann bei geschlossenem Beschleunigungsschalter der elektrische Kontaktwiderstand soweit reduziert werden, daß ein großer Strom fließen kann. Der Beschleunigungsschalter kann somit verwendet werden, um große Leistungen, wie sie beispielsweise bei aktiven Personenschutzsystemen in Kraftfahrzeugen notwendig sind, zu schalten. Durch die Elastizität des Hebelwerks wird ferner ein besonders prellfreies Schalten des Schalters erreicht. Um dabei so wenig Fläche wie möglich zu verbrauchen, ist es bei großen Hebelverhältnissen oft günstig, wenn der Hebel als mehrstufiger Hebel ausgeführt wird. Wenn der Hebel ebenfalls an einer Feder aufgehängt ist, wird durch eine geeignete Wahl der Übersetztung die Kontaktkraft bei vorgegebenem Stellweg des Hebels optimiert. Der Übergangswiderstand des Schalters wird durch eine Edelmetallbeschichtung und durch Noppen verringert. Als Materialien sind besonders Silizium und Metalle für die Herstellung der Schalter geeignet.

Durch das erfindungsgemäße Verfahren und die Ausführung in großer Strukturhöhe im Vergleich zur Federdicke, ist eine große Selektivität zur Richtung der Beschleunigung erreicht. Hierdurch wird ebenfalls die Schaltung großer Ströme auf kleinem Raum ermöglicht.

Durch die in den Unteransprüchen aufgeführten Maßnahmen sind vorteilhafte Weiterbildungen des im unabhängigen Anspruch angegebenen Verfahrens möglich. Besonders einfach erfolgt die Fixierung von Lagerblock und Kontaktblock auf einem isolierenden Substrat durch Kleben.

### Zeichnungen

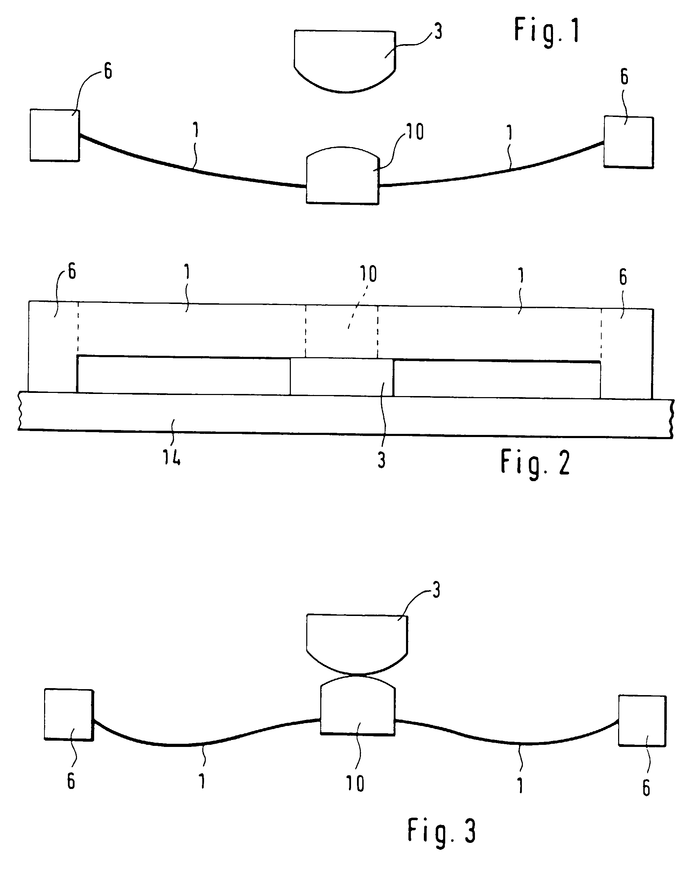

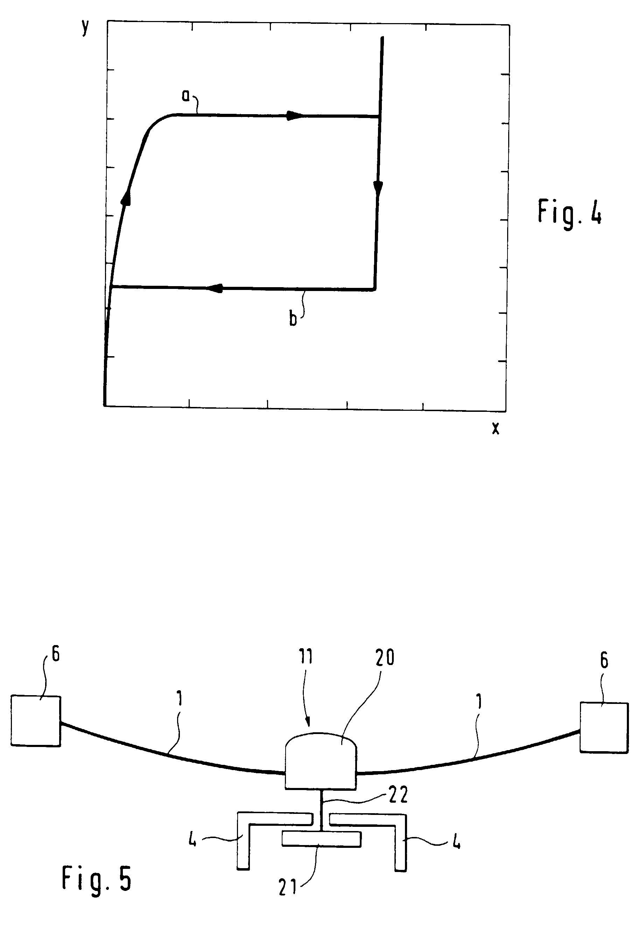

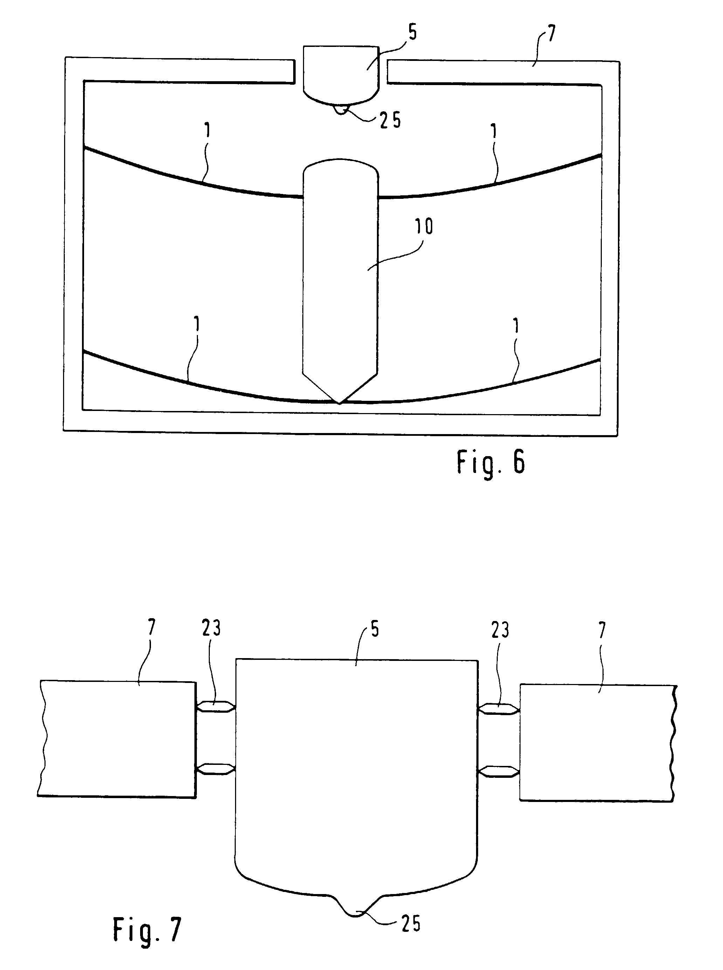

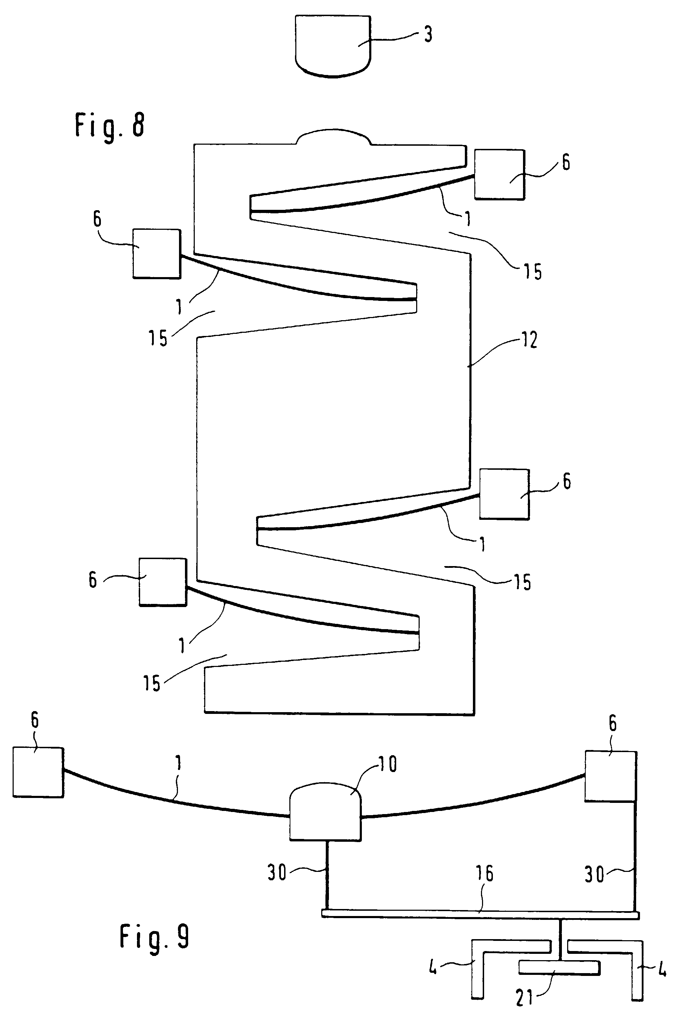

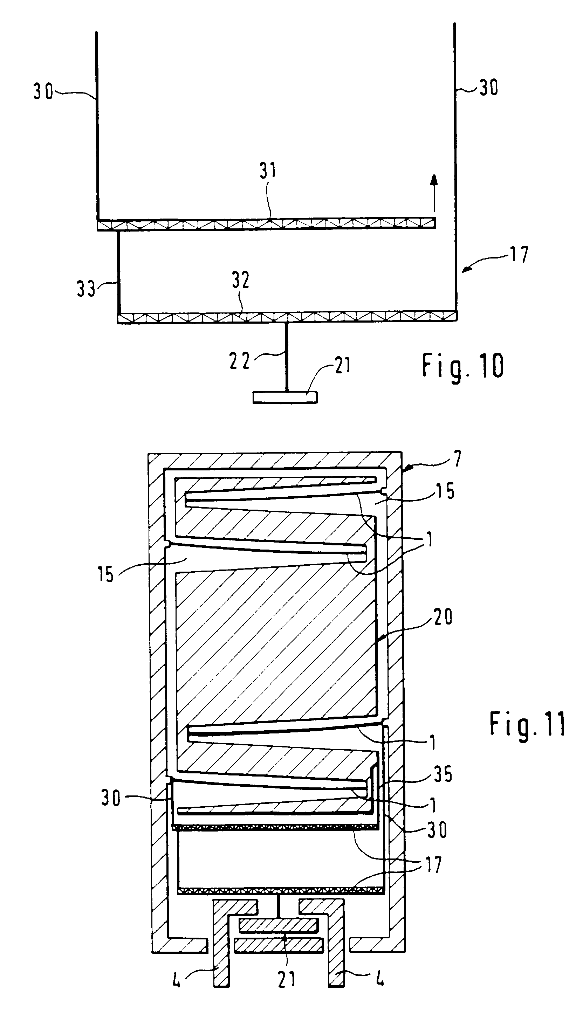

Ausführungsbeispiele der Erfindung sind in den Zeichnungen dargestellt und in der nachfolgenden Beschreibung näher erläutert. Es zeigen Figur 1 einen geöffneten Beschleunigungsschalter in der Aufsicht, Figur 2 den Beschleunigungsschalter nach Figur 1 in einer Seitenansicht, Figur 3 den Beschleunigungsschalter nach Figur 1 und Figur 2 in geschlossenem Zustand, Figur 4 eine Weg-Beschleunigungskennlinie des Beschleunigungsschalters, Figur 5 ein Ausführungsbeispiel mit einem zweigeteilten Kontaktblock, Figur 6 die Herstellung mittels Brennstrecken, Figur 7 ein Detail von Figur 6, Figur 8 die seismische Masse mit Ausnehmungen, Figur 9 einen Beschleunigungsschalter mit einem Hebel, Figur 10 einen mehrstufigen Hebel und Figur 11 ein Ausführungsbeispiel mit einem mehrstufigen Hebel.

### Beschreibung der Ausführungsbeispiele

In der Figur 1 ist eine Aufsicht und in der Figur 2 eine Seitenansicht auf einen erfindungsgemäßen Beschleunigungsschalter bestehend aus einem Kontaktblock 3, zwei Lagerblöcken 6, einer seismischen Masse 10 und zwei Federn 1 gezeigt. Der Kontaktblock 3 und die Lagerblöcke 6 sind auf einem isolierenden Substrat 14 verankert. An den Lagerblöcken 6 sind die Federn 1 und die seismische Masse 10 derart aufgehängt, daß sie in ihrer Beweglichkeit nicht durch Reibung mit dem isolierenden Substrat 14 behindert werden. Dadurch ist es möglich, daß die seismische Masse 10 bei einer Beschleunigung in Richtung des Kontaktblocks 3 aus ihrer Ruhelage ausgelenkt wird, so daß sie den Kontaktblock 3 berührt. Dies wird in der Figur 3 gezeigt. Durch die Berührung von Kontaktblock 3 und seismischer Masse 10 entsteht ein Strompfad, so daß ein Strom von den Lagerblöcken 6 über die Federn 1 und die seismische Masse 10 zum Kontaktblock 3 fließen kann. Durch hier nicht gezeigte Zuleitungen zu den Lagerblöcken 6 bzw. zum Kontaktblock 3 kann so die hier gezeigte Struktur als Beschleunigungsschalter verwendet werden.

Als Materialien für das isolierende Substrat 14 können keramische Materialien wie beispielsweise Aluminiumoxid oder Siliziumwafer mit einer entsprechenden Isolation verwendet werden. Als Materialien für den Kontaktblock 3, die Lagerblöcke 6, die Federn 1 und die seismische Masse 10 kommen beispielsweise galvanisch abscheidbare Metalle wie Kupfer oder Nickel in Frage. Es sind jedoch auch halbleitende Materialien wie Silizium oder Galiumarsenid vorstellbar, die durch eine entsprechende Dotierung leitend gemacht werden können. In Verbindung mit aufgebrachten Leitschichten sind auch isolierende Materialien wie beispielsweise Quarz für die Herstellung der Beschleunigungsschalter geeignet. Um den elektrischen Widerstand zwischen dem Kontaktblock 3 und der seismischen Masse 10 so gering wie möglich zu halten, kann auch vorgesehen sein, auf der Oberfläche eine dünne Schicht eines Edelmetalls wie beispielsweise Gold vorzusehen.

Herstellungsverfahren für solche Strukturen werden in den eingangs zitierten Schriften beschrieben.

In der Figur 4 wird anhand eines Diagramms das Schaltverhalten des Sensors beschrieben. Auf der x-Achse ist die Auslenkung, auf der y-Achse die Beschleunigung aufgetragen. Ausgehend von der in der Figur 1 gezeigten Ausgangslage wird die seismische Masse 10 bei steigender Beschleunigung wie in der Kurve a gezeigt ausgelenkt. Bis zu einer kritischen Beschleunigung ist die Auslenkung nur gering, um dann schlagartig auf einen höhreren Wert zu springen. Ein weiteres Anwachsen der Beschleunigung hat dann nur noch eine vernachlässigbare Auslenkung zur Folge, die vorwiegend in einer elastischen Verformung der seismischen Masse 10 bzw. des Kontaktblocks 3 besteht. Ausgehend von der Auslenkungslage nach Figur 3 verharrt die seismische Masse 3 bei nachlassender Beschleunigung zunächst in der Auslenkungslage wie in Figur 3 gezeigt. Erst wenn die Beschleunigung deutlich geringer geworden ist als die erste kritische Beschleunigung, bei der die seismische Masse 10 aus ihrer Ausgangslage in die Auslenkungslage springt, kehrt sie auf der Kurve b in Figur 4 aus der Auslenkungslage in die Ausgangslage zurück.

In der Figur 5 wird eine weitere Ausgestaltung des Beschleunigungsschalters mit Lagerblöcken 6, Federn 1, einer seismischen Masse 11 und einem Kontaktblock 4 gezeigt. Die seismische Masse 11 ist als Schwerkörper 20 mit einem Kontaktbalken 21 ausgestaltet, die durch eine Verbindungsfeder 22 verbunden sind. Der Kontaktblock 4 besteht aus zwei Hälften. Bei einer Beschleunigung wird die seismische Masse derart ausgelenkt, daß der Kontaktbalken 21 gegen die beiden Hälften des Kontaktblocks 4 gezogen wird. Durch die Verbindungsfeder 22 wird erreicht, daß trotz eventueller Fertigungsfehler der Kontaktbalken 21 mit annähert gleicher Kontaktkraft gegen die beiden Hälften des Kontaktblocks 4 gepreßt wird. Im geschlossenen Zustand entsteht so ein Strompfad, der es ermöglicht, daß von der einen Hälfte des Kontaktblocks 4 über den Kontaktbalken 21 ein Strom zur anderen Hälfte des Kontaktblocks 4 fließt. Durch Kontaktierung der beiden Hälften des Kontaktblocks 4 kann so die gezeigte Struktur als Beschleunigungsschalter verwendet werden. Durch die Verwendung des Kontaktbalkens 21 kann ein größerer Querschnitt auf dem gesamten Strompfad erreicht werden. Es muß keinerlei Rücksicht mehr auf den eventuell sehr geringen Querschnitt von Biegefedern genommen werden.

In der Figur 6 und in der Figur 7 ist eine weitere Ausgestaltung des Beschleunigungssensors gezeigt, die besonders einfach herstellbar ist. Die seismische Masse 10 ist durch vier Biegefedern 1 an einem als Rahmen ausgestalteten Lagerblock 7 aufgehängt. Durch die Verwendung von vier Biegefedern wird die Torsionsempfindlichkeit der einzelnen Biegefedern 1 verringert. Eine Torsion der Biegefedern ist mit einer veränderten Empfindlichkeit des Beschleunigungsschalter gegenüber Beschleunigungen verbunden und sollte daher weitgehend unterdrückt werden. Gegenüber der seismischen Masse 10 ist der Kontaktblock 5 angeordnet. Der Kontaktblock 5 weist hier eine Noppe 25 auf. Durch die Noppe 25 erfolgt der Kontaktschluß zwischen dem Kontaktblock 5 und der seismischen Masse 10 als Linienkontakt und nicht als Flächenkontakt. Erfahrungsgemäß sind die Kontakteigenschaften eines Linienkontaktes, insbesondere was den Übergangswiderstand und die Alterung angehen, einem Flächenkontakt vorzuziehen. In der Figur 7 ist die unmittelbare Umgebung des Kontaktblock 5 während eines Zwischenschrittes der Herstellung gezeigt. In diesem Stadium der Herstellung ist der Kontaktblock 5 noch durch Brennstrecken 23 mit dem Lagerblock 7 verbunden. Wenn man nun eine elektrische Spannung zwischen dem Kontaktblock 5 und dem Lagerblock 7 anlegt, so fließt der gesamte Strom über die Brennstrecken 23, die sich aufgrund ihres geringen Querschnitts so stark erwärmen, daß sie schmelzen. Auf diese Art wird eine elektrische Isolation zwischen dem Kontaktblock 5 und dem Lagerblock 7 erreicht. Das Herstellungsverfahren mittels Brennstrecken umfaßt somit folgende Schritte. Zunächst wird die in der Figur 6 gezeigte Struktur erzeugt, wobei dabei der Kontaktblock 5 noch mit dem Lagerblock 7 über Brennstrecken 23 verbunden ist. Der Kontaktblock 5 und der Lagerblock 7 werden dann auf einem isolierenden Substrat verankert, so daß die seismische Masse 10 und die Federn 1 nicht durch Reibung in ihrer Bewegung behindert werden. Dies kann beispielsweise durch die Verwendung einer dicken Klebeschicht auf der Unterseite von Kontaktblock 5 und Lagerblock 7 geschehen. Danach werden der Kontaktblock 5 und der Lagerblock 7 voneinander isoliert, indem die Brennstrecken 23 durchgebrannt werden. Durch eine entsprechende Auswahl der Klebeschicht und des isolierenden Substrats können dabei die thermisch verursachten Verspannungen zwischen einzelnen Teilen des Schalters untereinander und mit dem Substrat verringert werden.

In der Figur 8 ist eine weitere Ausgestaltung des Beschleunigungsschalters gezeigt, mit einer seismischen Masse 12, Lagerblöcken 6, Federn 1, und einem gegenüber der seismischen Masse 12 angeordneten Kontaktblock 3. In die seismische Masse 12 sind Ausnehmungen 15 angebracht, in denen die Federn 1 gelegen sind. Durch diese Anordnung der Federn 1 in Ausnehmungen 15 der seismischen Masse 12 wird der Platzbedarf bei der parallelen Herstellung einer Vielzahl von Beschleunigungsschaltern verringert. Dies liegt daran, daß ein Aufteilen der Substrate, auf denen die Beschleunigungsschalter hergestellt werden, mit vertretbarem Aufwand nur durch geradlinige Schritte erreicht werden kann. Bei der hier gezeigten kompakten Ausgestaltung der Beschleunigungsschalter, können die Beschleunigungsschalter bei der Herstellung eng nebeneinander produziert werden und so die Anzahl der hergestellten Beschleunigungsschalter pro Fläche erhöht werden. Weiterhin wird durch diese Anordnung die Torsionsempfindlichkeit der Biegefedern verringert.

In der Figur 9 ist eine weitere Ausgestaltung des Beschleunigungsschalters mit Lagerblöcken 6, Federn 1, einer seismischen Masse 10, einem zweigeteilten Kontaktblock 4 und einem Kontaktbalken 21 gezeigt. Zwischen der seismischen Masse 10 und dem Kontaktbalken 21 ist jedoch noch ein an Haltefedern 30 aufgehängter Hebel gelegen. Wenn die seismische Masse 10 aus ihrer Ruhelage ausgelenkt wird, so verformt sie die Haltefedern 30 derart, daß der Kontaktbalken 21 gegen die beiden Teile des Kontaktblocks 4 gezogen wird. Durch das Übersetzungsverhältnis des Hebels ist die dabei auftretende Kontaktkraft, d.h. die Kraft mit der der Kontaktbalken 21 gegen die beiden Teile des Kontaktblocks 4 gezogen wird, größer, als wenn die seismische Masse 10 direkt am Kontaktbalken 21 zieht. Eine Erhöhung der Kontaktkraft ist wünschenswert, da durch eine hohe Kontaktkraft der elektrische Übergangswiderstand verringert wird. Bei der Ausgestaltung des Hebels muß jedoch auch berücksichtigt werden, daß ein bestimmter Mindeststellweg d.h. der Weg den der Kontaktbalken 21 aus der Ausgangslage bis zum Kontaktschluß zurücklegt, berücksichtigt werden. Wünschenswert ist beispielsweise ein Stellweg von mehr als 10 Mikrometern. Bei vorgegebenenm Stellweg ist die erzielbare Kontaktkraft geringer als die Kontaktkraft, die aufgrund der einfachen Hebelverhältnisse zu erwarten ist. Dies liegt daran, daß ein Teil der Kraft aufgewendet werden muß um die Haltefedern zu verformen. Ein Optimum der der Kontaktkraft wird erreicht, wenn der Hebel so ausgelegt wird, daß bei voll ausgelenkter seismischer Masse 10 und geschlossenem Kontakt gerade die Hälfte der von der seismischen Masse 10 auf den Hebel 16 wirkenden Kraft für die Verformung der Haltefedern 30 aufgewendet wird.

In der Figur 10 wird eine weitere Ausgestaltung eines Hebels als mehrstufiger Hebel 17 gezeigt. Der mehrstufige Hebel 17 ist hier als zweistufiger Hebel ausgeführt. Dieser besteht aus einem ersten Teilhebel 31, an dessen Ende, wie durch den Pfeil angedeutet, die seismische Masse zieht. Weiterhin ist der erste Teilhebel 31 an einer Haltefeder 30 aufgehängt. Durch eine Verbindung 33 wird die Kraft auf einen zweiten Teilhebel 32 übergeleitet. An diesem zweiten Teilhebel 32 ist über eine Verbindungsfeder 22 der Kontaktbalken 21 angeordnet. Weiterhin ist der zweite Teilhebel 32 an einer Haltefeder 30 aufgehängt. Dieser mehrstufige Hebel 17 arbeitet in gleicher Weise wie der in Figur 9 vorgestellte Hebel. Gegenüber dem in Figur 9 vorgestellten Hebel erlaubt es jedoch der mehrstufige Hebel 17, sehr große Übersetzungsverhältnisse bei gleichzeitig sehr kompaktem Aufbau zu realisieren. Durch die Verwendung von mehrstufigen Hebeln kann somit ähnlich wie bei der Verwendung von Federn 1, die in Ausnehmungen 15 der seismischen Masse gelegen sind, eine Verbesserung der Flächennutzung bei der Herstellung erzielt werden. Um die Trägheit der beiden Teilhebel 31, 32 gering zu halten, sind diese als Stabwerke ausgebildet.

In der Figur 11 ist ein Beschleunigungsschalter gezeigt, der eine Reihe von Vorteilen miteinander kombiniert. Die seismische Masse 13 weist Ausnehmungen 15 auf, in denen die Biegefedern 1 gelegen sind. Der Lagerblock 7 ist als Rahmen ausgestaltet, wobei der zweigeteilte Kontaktblock 4 so angeordnet ist, daß der Sensor unter Verwendung von Brennstrecken hergestellt werden kann. Der Kontaktbalken 21 ist über einen zweistufigen Hebel 17 mit der seismischen Masse 13 verbunden. Die Beschleunigungskraft der seismischen Masse 13 wird durch eine Krafteinleitungsfeder 35 auf den zweistufigen Hebel 17 übertragen. Dieser ist an Haltefedern 30 am Lagerblock 7 aufgehängt. Der hier gezeigte Sensor läßt sich mit einem geringen Flächenaufwand herstellen. Die Herstellung ist wegen der Möglichkeit, Brennstrecken zu verwenden, besonders einfach, und die erzielbare Kontaktkraft ist hoch.

## Patentansprüche

1. Beschleunigungsschalter, insbesondere zur Messung eines Aufpralls eines Kraftfahrzeugs, der ein Feder-Masse-System, mit mindestens einer Feder (1, 2) und mindestens einer seismischen Masse (10 bis 13), aufweist, wobei mindestens ein Kontaktblock (3 bis 5) und mindestens ein Lagerblock (6, 7) auf einem isolierenden Substrat (14) befestigt sind, wobei die mindestens eine Feder (1, 2) mit der daran befestigten mindestens einen seismischen Masse (10 bis 13) mit dem Lagerblock (6, 7) verbunden ist, wobei die seismische Masse (10 bis 13) und die Feder (1, 2) einen Abstand zum Substrat (14) aufweisen, wobei die seismische Masse (10 bis 13) und der Kontaktblock (3 bis 5) einen geringen Abstand zueinander aufweisen und mindestens teilweise aus einem leitfähigen Material bestehen, wobei der Kontaktblock (3 bis 5), der Lagerblock (3, 7), die Feder (3, 2) und die seismische Masse (10 bis 13) Wände aufweisen, die vorwiegend senkrecht zum Substrat (14) sind, und beim Überschreiten eines vorgegebenen Beschleunigungswerts einen Kontakt schließt, dadurch gekennzeichnet, daß das Feder-Masse-System bei Beschleunigungen, die kleiner sind als ein vorgegebener Beschleunigungswert, nur geringfügig aus einer Ausgangslage abweicht und beim Überschreiten des vorgegebenen Beschleunigungswerts in eine Auslenkungslage springt, und danach beim Unterschreiten eines zweiten vorgegebenen Beschleunigungswerts, der kleiner ist als der erste Beschleunigungswert, von der Auslenkungslage in die Ausgangslage zurückkehrt.

2. Beschleunigungsschalter nach Anspruch 1, dadurch gekennzeichnet, daß mindestens zwei Federn (1, 2) verwendet werden, daß die Federn (1, 2) als Biegebalken ausgebildet sind, deren Dicke klein ist gegen die Länge.

3. Beschleunigungsschalter nach Anspruch 2, dadurch gekennzeichnet, daß die Federn (1, 2) in der Ausgangslage des Feder-Masse-Systems eine oder mehrere Krümmungen aufweisen.

4. Beschleunigungsschalter nach Anspruch 3, dadurch gekennzeichnet, daß die Federn (1, 2) in Ausnehmungen (15) der seismischen Masse (12, 13) hineinragen.

5. Beschleunigungsschalter nach einem der vorhergehenden Ansprüche, dadurch gekennzeichnet, daß der Kontakt zwischen der seismischen Masse (10 bis 13) und dem Kontaktblock (3 bis 5) geschlossen wird, so daß ein Strompfad vom Lagerblock (6, 7) über die Federn (1, 2) und die seismische Masse (10 bis 13) zum Kontaktblock (3 bis 5 ) entsteht.

6. Beschleunigungsschalter nach einem der Ansprüche 1 bis 5, dadurch gekennzeichnet, daß der Kontaktblock (4) zwei gegeneinander isolierte Teile aufweist, zwischen denen der Kontakt geschlossen wird, indem die seismische Masse (12 bis 13) zu beiden einen Kontakt schließt und so ein Strompfad vom einen Teil des Kontaktblocks (4) über die seismische Masse (10 bis 13) zum anderen Teil des Kontaktblocks (4) entsteht.

7. Beschleunigungsschalter nach einem der vorhergehenden Ansprüche, dadurch gekennzeichnet, daß die seismische Masse (11, 13) aus einem Schwerkörper (20) und einem daran befestigten Kontaktbalken (21) besteht.

8. Beschleunigungsschalter nach Anspruch 7, dadurch gekennzeichnet, daß der Kontaktbalken (21) elastisch befestigt ist.

9. Beschleunigungsschalter nach Anspruch 7 oder Anspruch 8, dadurch gekennzeichnet, daß zwischen dem Schwerkörper (20) und dem Kontaktbalken (21) ein Hebel (16, 17) gelegen ist.

10. Beschleunigungsschalter nach Anspruch 9, dadurch gekennzeichnet, daß der Hebel als mehrstufiger Hebel (17) ausgeführt ist.

11. Beschleunigungsschalter nach Anspruch 9 oder Anspruch 10, dadurch gekennzeichnet, daß der Hebel (16, 17) an mindestens einer Haltefeder (30) aufgehängt ist und daß die Übersetzung des Hebels (16,17) so ausgelegt ist, daß bei geschlossenem Kontakt die durch die Haltefeder (30) ausgeübte Rückstellkraft die Hälfte der vom Schwerkörper (20) am Hebel (16, 17) wirkenden Kraft beträgt.

12. Beschleunigungsschalter nach einem der vorhergehenden Ansprüche, dadurch gekennzeichnet, daß der Kontaktblock (3 bis 5) und/oder die seismische Masse (10 bis 13) auf der einander zugewandten Seite eine Beschichtung mit einem Edelmetall aufweisen.

13. Beschleunigungsschalter nach einem der vorhergehenden Ansprüche, dadurch gekennzeichnet, daß der Kontaktblock (3 bis 5) und/oder die seismische Masse (10 bis 13) auf der einander zugewandten Seite Noppen (25) aufweisen.

14. Beschleunigungsschalter nach einem der vorhergehenden Ansprüche, dadurch gekennzeichnet, daß der Kontaktblock (3 bis 5), der Lagerblock (3, 7), die Feder (3, 2) und die seismische Masse (10 bis 13) aus Metall bestehen.

15. Beschleunigungsschalter nach einem der Ansprüche 1- 13, dadurch gekennzeichnet, daß daß der Kontaktblock (3 bis 5), der Lagerblock (3, 7), die Feder (3, 2) und die seismische Masse (10 bis 13) aus Silizium bestehen.

16. Verfahren zur Herstellung von Beschleunigungsschaltern nach einem der vorhergehenden Ansprüche, dadurch gekennzeichnet, daß jeweils mindestens eine seismische Masse (10 bis 13), die an einer Feder (1, 2) an einem Lagerblock (6, 7) hängt, und ein gegenüber der seismischen Masse (10 bis 13) gelegener Kontaktblock (3 bis 5) erzeugt werden, daß der Kontaktblock (3 bis 5) durch Brennstrecken (23) mit dem Rest des Beschleunigungsschalters verbunden ist, daß Lagerblock (6, 7) und Kontaktblock (3 bis 5) mit einem isolierenden Substrat (14) verbunden werden, und daß die Brennstrecken (23) danach durch Anlegen einer Spannung durchgebrannt werden.

17. Verfahren nach Anspruch 16, dadurch gekennzeichnet, daß die Verbindung von Lagerblock (6, 7) und Kontaktblock (3 bis 5) mit dem isolierenden Substrat durch Kleben erfolgt.

## Claims

1. Inertia switch, in particular for measuring an impact of a motor vehicle, which has a spring-mass system with at least one spring (1, 2) and at least one inertial mass (10 to 13), at least one contact block (3 to 5) and at least one bearing block (6, 7) being secured on an insulating substrate (14), the spring or springs (1, 2) together with the inertial mass or masses (10 to 13) secured thereon being connected to the bearing block (6, 7), the inertial mass (10 to 13) and the spring (1, 2) being at a distance from the substrate (14), the inertial mass (10 to 13) and the contact block (3 to 5) being at a smaller distance from one another and being composed at least partially of a conductive material, the contact block (3 to 5), the bearing block (3, 7), the spring (3, 2) and the inertial mass (10 to 13) having walls which are predominantly perpendicular to the substrate (14), and a contact closing when a predetermined acceleration value is exceeded, characterized in that the spring-mass system deviates only slightly from its starting position in the case of accelerations which are smaller than a predetermined acceleration value and flips into a deflected position when the predetermined acceleration value is exceeded, and then returns from the deflected position to the starting position when a second predetermined acceleration value, which is smaller than the first acceleration value, is undershot.

2. Inertia switch according to Claim 1, characterized in that at least two springs (1, 2) are used, in that the springs (1, 2) are designed as bending beams, the thickness of which is small relative to their length.

3. Inertia switch according to Claim 2, characterized in that the springs (1, 2) have one or more curves in the starting position of the spring-mass system.

4. Inertia switch according to Claim 3, characterized in that the springs (1, 2) project into recesses (15) in the inertial mass (12, 13).

5. Inertia switch according to one of the preceding claims, characterized in that the contact between the inertial mass (10 to 13) and the contact block (3 to 5) is closed, giving rise to a current path from the bearing block (6, 7) to the contact block (3 to 5) via the springs (1, 2) and the inertial mass (10 to 13).

6. Inertia switch according to one of Claims 1 to 5, characterized in that the contact block (4) has two mutually insulated parts, between which the contact is closed when the inertial mass (12 to 13) closes a contact with both, giving rise to a current path from one part of the contact block (4) to the other part of the contact block (4) via the inertial mass (10 to 13).

7. Inertia switch according to one of the preceding claims, characterized in that the inertial mass (11, 13) comprises a weight (20) and a contact beam (21) attached to the latter.

8. Inertia switch according to Claim 7, characterized in that the contact beam (21) is elastically attached.

9. Inertia switch according to Claim 7 or Claim 8, characterized in that a lever (16, 17) is placed between the weight (20) and the contact beam (21).

10. Inertia switch according to Claim 9, characterized in that the lever is designed as a multi-stage lever (17).

11. Inertia switch according to Claim 9 or Claim 10, characterized in that the lever (16, 17) is suspended from at least one holding spring (30) and in that the leverage of the lever (16, 17) is designed in such a way that, with the contact closed, the restoring force exerted by the holding spring (30) amounts to half of the force imposed on the lever (16, 17) by the weight (20).

12. Inertia switch according to one of the preceding claims, characterized in that the contact block (3 to 5) and/or the inertial mass (10 to 13) are/is coated with a noble metal on their mutually facing sides.

13. Inertia switch according to one of the preceding claims, characterized in that the contact block (3 to 5) and/or the inertial mass (10 to 13) have/has knobs (25) on their mutually facing sides.

14. Inertia switch according to one of the preceding claims, characterized in that the contact block (3 to 5), the bearing block (3, 7), the spring (3, 2) and the inertial mass (10 to 13) are composed of metal.

15. Inertia switch according to one of Claims 1 - 13, characterized in that the contact block (3 to 5), the bearing block (3, 7), the spring (3, 2) and the inertial mass (10 to 13) are composed of silicon.

16. Method for the production of inertia switches according to one of the preceding claims, characterized in that in each case at least one inertial mass (10 to 13), which hangs from a spring (1, 2) on a bearing block (6, 7), and a contact block (3 to 5) situated opposite the inertial mass (10 to 13) are produced, in that the contact block (3 to 5) is connected to the remainder of the inertia switch by burning sections (23), in that the bearing block (6, 7) and the contact block (3 to 5) are connected to an insulating substrate (14), and in that the burning sections (23) are then burnt through by applying a voltage.

17. Method according to Claim 16, characterized in that the bearing block (6, 7) and the contact block (3 to 5) are connected to the insulating substrate by adhesive bonding.

## Revendications

1. Interrupteur inertiel, notamment pour mesurer une collision de véhicules, comprenant un système ressort-masse avec un ressort (1, 2), au moins une masse sismique (10-13), au moins un bloc de contact (3-5) et au moins un bloc de palier (6, 7) étant fixés sur un support isolant (14), au moins un ressort (1, 2) étant relié au bloc de palier (6, 7) par au moins une masse sismique (10-13) fixée sur ce ressort, la masse sismique (10-13) et le ressort (1, 2) étant distants du support (14), la masse sismique (10-13) et le bloc de contact (3-5) ayant entre eux une distance plus faible et étant réalisés en partie en une matière conductrice, le bloc de contact (3-5), le bloc de palier (3, 7), les ressorts (1, 2) et la masse sismique (10-13) ayant des parois principalement perpendiculaires au support (14) et en cas de dépassement d'une valeur d'accélération prédéterminée ils ferment un contact,
caractérisé en ce que le système ressort-masse ne dévie que légèrement de sa position de repos, lorsque les accélérations sont inférieures à une valeur d'accélération prédéterminée, et lors du dépassement de cette valeur d'accélération prédéterminée le système passe brusquement dans une position de débattement et après dépassement vers le bas d'une seconde valeur d'accélération prédéterminée, inférieure à la première valeur d'accélération, le système revient de sa position de débattement à sa position de repos.

2. Interrupteur inertiel selon la revendication 1,
caractérisé par
au moins deux ressorts (1, 2), ces ressorts (1, 2) étant en forme de poutres de flexion dont l'épaisseur est faible par rapport à la longueur.

3. Interrupteur inertiel selon la revendication 2,
caractérisé en ce que
les ressorts (1, 2) présentent une ou plusieurs parties courbes lorsque le système ressort-masse est en position de repos.

4. Interrupteur inertiel selon la revendication 3,
caractérisé en ce que
les ressorts (1, 2) pénètrent dans les cavités (15) de la masse sismique (12, 13).

5. Interrupteur inertiel selon l'une des revendications précédentes,
caractérisé en ce que
le contact entre la masse sismique (10-13) et le bloc de contact (2-3) est fermé, créant un chemin de courant électrique entre le bloc de palier (6, 7) et les ressorts (1, 2) et la masse sismique (10-13) vers le bloc de contact (3-5).

6. Interrupteur inertiel selon l'une des revendications 1 à 5,
caractérisé en ce que
le bloc de contact (4) comporte deux parties isolées l'une par rapport à l'autre et entre lesquelles on ferme le contact, la masse sismique (12-13) fermant un contact avec les deux parties et créant ainsi un chemin de courant entre une partie du bloc de contact (4), par la masse sismique (10-13) jusqu'à l'autre partie du bloc de contact (4).

7. Interrupteur inertiel selon l'une des revendications précédentes,
caractérisé en ce que
la masse sismique (11-13) se compose d'un corps pesant (20) et d'une poutre de contact (21) fixé à celui-ci.

8. Interrupteur inertiel selon la revendication 7,
caractérisé en ce que
la poutre de contact (21) est fixée élastiquement.

9. Interrupteur inertiel selon la revendication 7 ou la revendication 8,
caractérisé par
un levier (16, 17) prévu entre le corps pesant (20) et la poutre de contact (21).

10. Interrupteur inertiel selon la revendication 9,
caractérisé en ce que
le levier est un levier (17) à plusieurs niveaux.

11. Interrupteur inertiel selon la revendication 9 ou la revendication 10,
caractérisé en ce que
le levier (16, 17) est suspendu à au moins un ressort de retenue (30) et la démultiplication assurée par le ressort (16, 17) est conçue pour que lorsque le contact est fermé, la force de rappel exercée par le ressort de retenue (30) correspond à la moitié de la force exercée par le corps pesant (20) sur le levier (16, 17).

12. Interrupteur inertiel selon l'une des revendications précédentes,
caractérisé en ce que
le bloc de contact (3-5) et/ou la masse sismique (10-13) comportent un revêtement d'un métal noble sur leurs faces opposées.

13. Interrupteur inertiel selon l'une des revendications précédentes,
caractérisé en ce que
le bloc de contact (3-5) et/ou la masse sismique (10-13) ont des bossages (25) sur leurs faces opposées.

14. Interrupteur inertiel selon l'une des revendications précédentes,
caractérisé en ce que
le bloc de contact (3-5), le bloc de palier (3, 7), les ressorts (1, 2) et la masse sismique (10-13) sont en métal.

15. Interrupteur inertiel selon l'une des revendications 1 à 13,
caractérisé en ce que
le bloc de contact (3-5), le bloc de palier (3, 7), les ressorts (1, 2) et la masse sismique (10-13) sont en silicium.

16. Procédé de fabrication d'interrupteur inertiel selon l'une des revendications précédentes,
caractérisé en ce que
on réalise chaque fois au moins une masse sismique (10-13) suspendue par un ressort (1, 2) à un bloc de palier (6, 7) et un bloc de contact (3-5) situé en regard de la masse sismique (10-13), on relie le bloc de contact (3-5) par des chemins fusibles (23) à la partie restante de l'interrupteur inertiel, on relie le bloc de palier (6, 7) et le bloc de contact (3-5) à un support isolant (14) et on brûle les chemins fusibles (23) en appliquant une tension.

17. Procédé selon la revendication 16,
caractérisé en ce que
la liaison entre le bloc de palier (6, 7) et le bloc de contact (3-5) se fait par collage au support isolant.
